Europäisches Patentamt

European Patent Office

Office européen des brevets

(19)

(11) **EP 1 051 099 B1**

(12) **FASCICULE DE BREVET EUROPEEN**

(45) Date de publication et mention
de la délivrance du brevet:
**14.05.2003 Bulletin 2003/20**

(21) Numéro de dépôt: **99901633.0**

(22) Date de dépôt: **27.01.1999**

(51) Int Cl.⁷: $A47J\ 27/21$, $G05D\ 23/24$, $H01H\ 1/02$

(86) Numéro de dépôt international:
**PCT/FR99/00156**

(87) Numéro de publication internationale:
**WO 99/038426 (05.08.1999 Gazette 1999/31)**

(54) **THERMOSTAT A THERMISTANCE ET INTERRUPTEUR-RELAIS POUR RESISTANCES CHAUFFANTES D'APPAREIL ELECTROMENAGER**

THERMOSTAT MIT THERMISTOR UND SCHALTRELAIS FÜR HEIZWIDERSTÄNDE IN EINEM HAUSHALTSGERÄT

THERMOSTAT WITH THERMISTORS AND SWITCH-RELAYS FOR HEATING RESISTORS IN AN ELECTRICAL HOUSEHOLD APPLIANCE

(84) Etats contractants désignés:
**DE FR GB**

(30) Priorité: **28.01.1998 FR 9801182**

(43) Date de publication de la demande:
**15.11.2000 Bulletin 2000/46**

(73) Titulaire: **SEB S.A.**
**69130 Ecully (FR)**

(72) Inventeurs:
• **BALANDIER, Jean-Marie**
**F-88400 Gérardmer (FR)**
• **GUEGAN, Laurent**
**F-88200 Remiremont (FR)**

(74) Mandataire: **Kiehl, Hubert**
**SEB Développement,**
**Les 4 M-Chemin du Petit Bois,**
**B.P. 172**
**69132 Ecully Cedex (FR)**

(56) Documents cités:
**EP-A- 0 510 863          US-A- 3 846 679**

• **G.N. TEKSTER-PROSKURYAKOVA: "Posistors: temperature-sensitive resistors with a postive temperature coefficient of resistance" INSTRUMENT CONSTRUCTION, no. 10, octobre 1966, pages 27-29, XP002079930**

## Description

### DOMAINE TECHNIQUE

La présente invention se rapporte au domaine de la régulation d'éléments chauffants que l'on trouve dans le petit électroménager (bouilloire, cafetières, friteuses...), ces éléments chauffants pouvant être constitués d'une résistance blindée ou d'une piste résistive déposée par sérigraphie.

### TECHNIQUE ANTERIEURE

On connaît, par le document DE 1 673 503 l'utilisation de thermistances pour détecter l'ébullition et la température de l'eau dans un appareil électrique de chauffage de l'eau, ces thermistances permettant de déclencher un thyristor afin de couper l'alimentation électrique de la résistance de chauffe qui est un élément de type blindé, massif.

De même, le document FR 2 191 390 décrit un appareil électrique utilisant des thermistances pour le contrôle de la température et de l'ébullition de l'eau, les thermistances étant en relation avec la base d'un transistor afin de le rendre conducteur par variation de la résistance présentée par la thermistance sous l'effet d'une augmentation de température. Une des thermistances est en effet située à proximité de l'élément chauffant massif, de type blindé.

Les dispositifs électroniques associés à ces deux documents présentent l'inconvénient d'utiliser un composant intermédiaire entre l'interrupteur du circuit électrique d'alimentation de l'élément chauffant et les détecteurs de température que sont les thermistances.

L'utilisation directe de thermistances pour la commande d'un interrupteur est indiquée dans le document EP 510 863 où une thermistance à coefficient de température positif est utilisée dans le circuit d'alimentation de la bobine d'un relais électromagnétique, l'augmentation de la valeur de la résistance électrique de la thermistance faisant chuter le courant traversant la bobine jusqu'à produire l'ouverture du relais donc de l'alimentation électrique de l'élément chauffant, qui est un élément massif de type blindé. Cette solution utilise des thermistances standards, de taille relativement importante, dont l'insertion dans le circuit de commande d'un électroaimant est compatible avec les courants de commande des électroaimants de type connu pour commuter les puissances typiquement rencontrées dans les appareils électroménagers, à savoir 2000 à 3000 W. La solution présentée ne permet pas d'envisager l'utilisation de thermistances de faible dimension, car, compte tenu des courants nécessaires pour le fonctionnement du relais, les thermistances pourraient s'auto-échauffer et créer une perturbation dans le dispositif de régulation.

Par ailleurs, on connaît, par le document EP 574 310, une plaque chauffante utilisée dans la construction d'un appareil de type bouilloire, où une piste résistive est déposée par sérigraphie sur une couche vitreuse électriquement isolante, afin de réaliser l'élément de chauffage de l'appareil. Les moyens de détection de la température, d'ébullition et de protection en cas de surchauffe rencontrés pour ces plaques de chauffe utilisent des moyens traditionnels à base d'éléments bimétalliques et /ou d'éléments thermofusibles, comme dans le document PCTWO 95/11516.

### EXPOSE DE L'INVENTION

Un des buts de la présente invention est la conception de moyens simples, à réaction rapide et faible coût pour la protection, notamment en cas de surchauffe, d'une plaque de chauffe dont l'élément chauffant est une résistance blindée ou une piste résistive sérigraphiée.

Un objet complémentaire de la présente invention est d'associer des moyens de détection d'ébullition d'un liquide ou d'une température limite de chauffe aux moyens de protection de surchauffe lorsque l'appareil est destiné à recevoir un liquide.

Un autre objet de la présente invention est l'utilisation de thermistances comme moyens de détection de température pour le déclenchement d'interrupteur-relais inséré dans le circuit d'alimentation de la résistance de chauffe d'un appareil électroménager.

Le principe général de l'invention est d'utiliser un relais, qu'il est possible de forcer manuellement, et de contrôler le courant traversant la bobine de commande de ce relais par au moins une thermistance, c'est à dire par un composant dont la résistance varie selon la température à laquelle il est exposé, en présentant une rupture brusque de pente à une température déterminée.

Avantageusement, l'utilisation d'une piste résistive sérigraphiée permet de concevoir des solutions simples d'alimentation du relais ainsi que des positionnements plus efficaces de la thermistance.

La présente invention est atteinte à l'aide d'un thermostat pour appareil électroménager électrique, comportant un corps de chauffe ayant une plaque en liaison thermique avec des éléments de chauffe, ledit thermostat comportant en outre un relais électromagnétique susceptible d'interrompre l'alimentation électrique des éléments de chauffe, au moins une thermistance insérée dans le circuit de commande du relais et disposée à proximité d'une zone de chauffage de l'eau ou en contact thermique avec la plaque de chauffe si présente, caractérisé en ce que la valeur minimale de la résistance électrique présentée par la thermistance ou l'association des thermistances est déterminée de telle sorte que le courant électrique maximal admis dans le circuit de commande du relais, lors du fonctionnement normal de l'appareil, soit supérieur au courant de maintien des contacts fermés du relais mais inférieur au courant permettant la fermeture des contacts du relais.

Cette configuration permet de limiter l'auto-échauffement de la ou des thermistances.

Ainsi, la présente invention se caractérise par l'utilisation de thermistances en évitant leur auto-échauffement par un courant les traversant trop important, le courant maximal autorisé dans le circuit de commande de l'électroaimant étant limité au courant nécessaire au maintien des contacts fermés de l'électroaimant. Ainsi, la fermeture des contacts sera obtenue en forçant physiquement le relais. A ce titre, on utilise plutôt des thermistances de petite taille.

En particulier, le thermostat dispose d'une thermistance destinée à pallier à une surchauffe de la plaque de chauffe.

Cette thermistance que nous appellerons thermistance de surchauffe présente un coefficient de température positif, de sorte que l'augmentation de la valeur ohmique de la résistance électrique de cette thermistance, due à une augmentation de température, est susceptible de diminuer le courant dans le circuit de commande du relais électromagnétique sous la valeur minimale de maintien des contacts fermés du relais.

Dans une variante du dispositif, une résistance électrique, dont la valeur ohmique fluctue peu lors de l'utilisation de l'appareil est insérée dans le circuit de commande du relais où sont situées la thermistance ou l'association de thermistances. Ceci permet d'ajuster les valeurs ohmiques des thermistances à la spécificité du relais et notamment à sa valeur de tension nominale de fonctionnement.

Dans un mode particulier de connexion de la thermistance de surchauffe, celle-ci est reliée au circuit électrique du thermostat, d'une part par un contact au niveau de la face de la thermistance en contact thermique avec la plaque de chauffe ou une plaque liée thermiquement aux moyens de chauffe, et d'autre part, sur la face opposée de la thermistance, par une lame souple maintenue par un support, de manière à réaliser une continuité électrique du circuit de commande du relais électromagnétique au niveau de la thermistance.

Dans un autre mode de réalisation de l'invention, la thermistance de surchauffe est constituée par au moins un dépôt sérigraphié inséré entre les spires de la résistance de chauffe.

Selon ce dernier mode de réalisation, avantageusement, la thermistance de surchauffe est disposée sur une longueur sensiblement équivalente à la longueur de l'élément blindé ou à une spire de la résistance de chauffe lorsque l'élément de chauffe est une résistance sérigraphiée, de manière à détecter une surchauffe locale de la plaque de chauffe.

De façon complémentaire, le thermostat comporte une deuxième thermistance destinée à détecter l'ébullition d'un liquide, ladite thermistance étant protégée de la vapeur par une couche hydrofuge de type vernis et étant montée mécaniquement dans le circuit de vapeur de l'appareil. Cette thermistance, que nous appellerons, dans la suite de la description, thermistance d'ébullition, est avantageusement montée électriquement en série avec la thermistance de surchauffe afin de simplifier l'implantation des composants du thermostat. Il est aussi possible d'employer une thermistance dite d'eau chaude, permettant de détecter une certaine température, par exemple 70°C, afin d'arrêter le chauffage à cette température. Cette thermistance serait appliquée contre le corps de la bouilloire. Un commutateur électrique à deux positions, accessible depuis l'extérieur de l'appareil, donc actionnable manuellement par l'utilisateur, est inséré dans le circuit de commande du relais électromagnétique. Chacune des positions dudit commutateur permet d'inclure, dans le circuit électrique de commande du relais électromagnétique, soit ladite thermistance d'eau chaude, soit la thermistance d'ébullition.

Selon un mode particulier de réalisation, le relais électromagnétique utilisé est un relais dont la tension d'alimentation est de 220 V alternatif.

Selon un mode préférentiel de l'invention, l'alimentation du circuit de commande de l'interrupteur relais est réalisé par un pont diviseur de tension établi sur l'élément de chauffe. Ceci permet d'adapter la spécificité électrique du circuit de commande par des moyens simples, et un minimum de pièces supplémentaires.

Avantageusement, la connexion réalisant le pont diviseur de tension peut être effectuée à différents endroits de l'élément de chauffe afin que la tension d'alimentation du circuit de commande de l'interrupteur relais reste pioche d'une valeur nominale de fonctionnement du relais. Il est important de pouvoir ajuster la tension du circuit d'alimentation de la bobine commandant le relais au plus proche de la valeur nominale de fonctionnement, car le procédé de sérigraphie présente une dispersion assez importante dans les caractéristiques physiques des couches déposées.

Dans une variante de conception de l'invention, le thermostat comporte un deuxième dispositif évitant la surchauffe de l'élément de chauffe, composé d'un bilame à retournement brusque, disposé à la surface de l'élément de chauffe et comportant une tige susceptible d'ouvrir le circuit électrique d'alimentation de la résistance de chauffe lorsque ce bilame se retourne sous l'effet de l'augmentation anormale de la température présentée par l'élément de chauffe lors d'une surchauffe. Cette double protection limite considérablement les conséquences destructives d'une surchauffe anormale de la plaque de chauffe en palliant à une éventuelle défaillance du premier système de détection d'une surchauffe.

## DESCRIPTION SOMMAIRE DES DESSINS

La présente invention sera mieux comprise à l'aide des dessins annexés, donnés à titre indicatif et illustrant un mode de réalisation, parmi lesquels :

- la figure 1 est une vue en coupe d'une plaque de chauffe comportant une résistance blindée,
- la figure 2 rappelle les caractéristiques physiques des thermistances,

- la figure 3 est une vue en coupe d'une plaque de chauffe, par piste résistive sérigraphiée, d'un appareil destiné à chauffer des liquides,
- la figure 4 présente, selon une vue de face, la partie de la plaque de chauffe comportant la thermistance de surchauffe,
- la figure 5 est un des schémas électriques possibles du système thermostatique sur l'élément chauffant,
- la figure 6 présente une variante du schéma électrique du système thermostatique,
- la figure 7 présente le principe d'alimentation du circuit de commande, dans une vue partielle de la plaque de chauffe,
- la figure 8 présente une variante d'implantation de la thermistance dans une vue de face de la plaque de chauffe,
- la figure 9 présente schématiquement, dans une vue en coupe, l'implantation d'un second détecteur de surchauffe.

## MEILLEURE MANIERE DE REALISER L'INVENTION

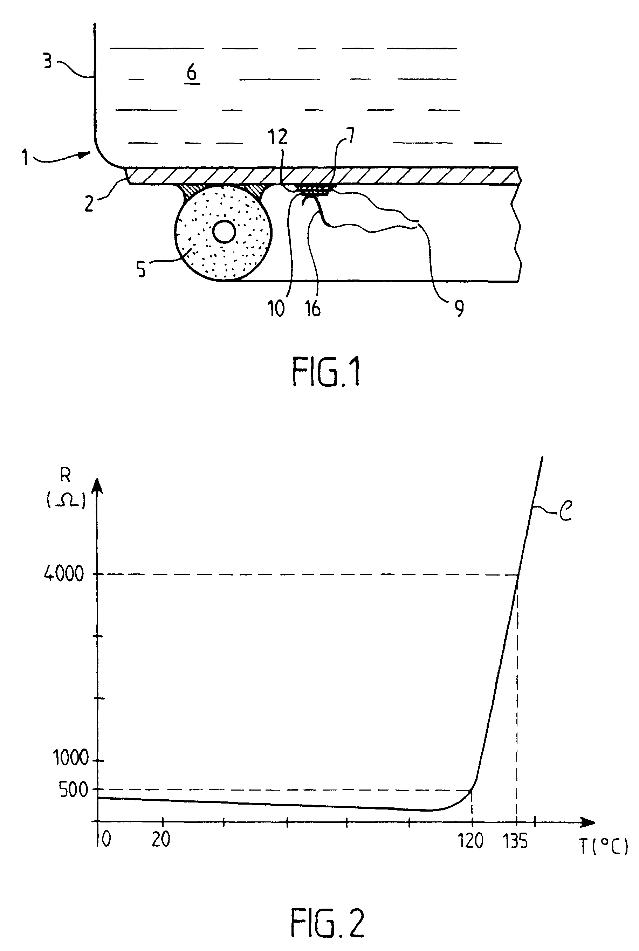

La figure 1 présente, dans une vue en coupe, une plaque de chauffe 1 composée d'une cuve inox 3 destinée à recevoir un liquide à chauffer, d'une plaque métallique 2 comme fond diffuseur de la chaleur, ainsi que d'un élément chauffant qui est une résistance blindée 5 cachée. La thermistance 10 utilisée est de très faible dimension afin d'offrir une réactivité importante.

En effet, comme il a déjà été mentionné, la puissance développée par l'élément chauffant est telle que la réactivité de la thermistance utilisée doit être très grande pour des raisons évidentes de sécurité. Cette réactivité est essentiellement déterminée par la faible taille de thermistance et notamment de son épaisseur. En effet, la surface ne joue pas un grand rôle dans la réactivité de la thermistance car cette surface étant en contact avec la surface chauffée ou une image de celle-ci, la rapidité de variation de la résistance globale de la thermistance est liée à son épaisseur.

Cependant, lorsque l'on aborde des composants de faibles dimensions parcourus par un courant électrique, des phénomènes d'auto-échauffement apparaissent. On peut dire que la thermistance utilisée s'auto-échauffera lorsque la puissance émise par celle-ci sera inférieure à la puissance absorbée. Il convient donc, soit d'augmenter la puissance émise, soit de diminuer la puissance absorbée.

La puissance émise varie comme le produit de la surface d'émission par la différence de température entre l'air ambiant et la thermistance. En augmentant la surface de la thermistance, on augmente la puissance émise.

La puissance absorbée varie comme le carré du courant traversant la thermistance et comme la valeur de la résistance présentée par la thermistance, ladite résistance R étant donnée par la formule :

$$R = \rho\, e/S$$

où
$\rho$ est la résistivité électrique de la thermistance,
e est l'épaisseur de la thermistance,
S est la surface de contact électrique de la thermistance, en première approximation.

Ainsi, un des moyens pour diminuer la puissance absorbée est de diminuer l'épaisseur de la thermistance et d'augmenter la surface de contact. La réduction de l'épaisseur de la thermistance est donc importante pour apporter de la réactivité à la thermistance et pour diminuer la puissance absorbée.

Il conviendra, dans ce cas, de maintenir la valeur totale de la résistance de la branche de régulation, pour que le relais fonctionne sous sa tension nominale.

La diminution de la puissance absorbée peut aussi, en complément ou non de la diminution de l'épaisseur de la thermistance, être obtenue par diminution du courant, et ceci d'autant plus que le courant intervient par sa valeur au carré dans le calcul de la puissance absorbée.

Cette réduction du courant peut être obtenue en choisissant un relais à faible courant de maintien. Cependant, on se heurte rapidement à des problèmes technologiques.

Une autre voie, objet spécifique de la présente invention, est de limiter le courant traversant la thermistance au courant permettant le maintien des contacts fermés, la fermeture des contacts étant effectuée manuellement.

Le courant ainsi nécessaire peut être diminué d'un facteur 2, réduisant la puissance absorbée d'un facteur 4.

Il est alors possible, compte tenu de cette réduction, d'utiliser des thermistances dont l'épaisseur active, rentrant en jeu dans la définition de la valeur de la résistance participant à la régulation, est très faible, inférieure à quelques mm, et ceci sans que ces thermistances présentent d'auto-échauffement.

Par cette réduction de la puissance absorbée, il est également possible de réduire la surface active de la thermistance à des valeurs inférieures à 10 mm².

Dans l'exemple présenté, la thermistance 10 utilisée présente une surface active de 1,6 mm x 1,6 mm pour une hauteur de 0,8 mm. De tels composants sont souvent dénommés "chip" pour leur faible taille. Nous utiliserons, par la suite, le terme de micro-thermistance pour désigner une thermistance présentant cette particularité de petite taille, que cette réduction de taille soit uniquement liée à son épaisseur et/ou à sa surface.

Dans l'exemple proposé, la plaque de chauffe est destinée à un appareil de chauffage de l'eau 6, de type bouilloire. Ainsi, la micro-thermistance 10 est conçue pour éviter une chauffe à sec de la plaque de chauffe 1. La configuration de cette micro-thermistance 10 est telle que sa résistance électrique est inférieure à 550 Ω en chauffage d'eau, et ce, même en présence d'un dépôt de tartre, et supérieure à 4000 Ω en absence d'eau. La thermistance 10 étant située au niveau du fond diffuseur 2, aussi proche que possible de la résistance de chauffe 5, elle présente alors une résistance électrique inférieure à 550 Ω jusqu'à des températures de 120 °C, et supérieure à 4000 Ω vers 135 °C.

Il est possible de ne jouer que sur l'épaisseur de la thermistance, cette dernière présentant alors une surface plus importante. Dans ce cas, la valeur de la résistance de la thermistance étant globalement moins élevée, il convient d'ajouter une résistance fixe en série afin de maintenir la valeur totale de la résistance du circuit de régulation pilotant le relais.

La courbe $\ell$ présentée figure 2 illustre les variations de la résistance électrique de la micro-thermistance 10 de chauffe à sec en fonction de la température à laquelle elle est soumise. Cette courbe typique permet de constater que la résistance de cette micro-thermistance fluctue peu jusqu'à une certaine température où un accroissement très important de la résistance électrique a lieu, puisque cette valeur est pratiquement décuplée sur une plage de 15 °C environ. Cette propriété d'une augmentation rapide de la résistance électrique sur une plage très faible de température est avantageusement exploitée dans la présente invention comme il sera ultérieurement expliqué.

La micro-thermistance 10 présentée figure 1 est disposée, à l'aide d'une lame support 16 sur une zone uniforme chauffante et, grâce à sa petite taille, au voisinage immédiat de l'élément chauffant 5, ce qui engendre une grande réactivité de ce composant, par son couplage au plus proche de l'élément chauffant, et par sa faible inertie propre. Cette micro-thermistance 10 est isolée électriquement du fond diffuseur 2 par un film isolant électrique 7. Elle est par ailleurs insérée dans le circuit électrique de commande de l'éléctroaimant permettant d'interrompre l'alimentation de l'élément chauffant, via les fils de connexion 9 dont l'un est relié à la lame souple 16 qui constitue l'électrode supérieure et l'autre à un film conducteur, tel une électrode d'argent 12 constituant l'électrode inférieure.

Il est tout à fait envisageable, dans le cadre de la présente invention, d'utiliser une telle micro-thermistance lorsque l'élément chauffant est une résistance immergée. Dans ce cas de figure, la thermistance est disposée à l'extérieur de l'enceinte contenant le liquide à chauffer, sur une plaque métallique en liaison thermique avec l'élément chauffant.

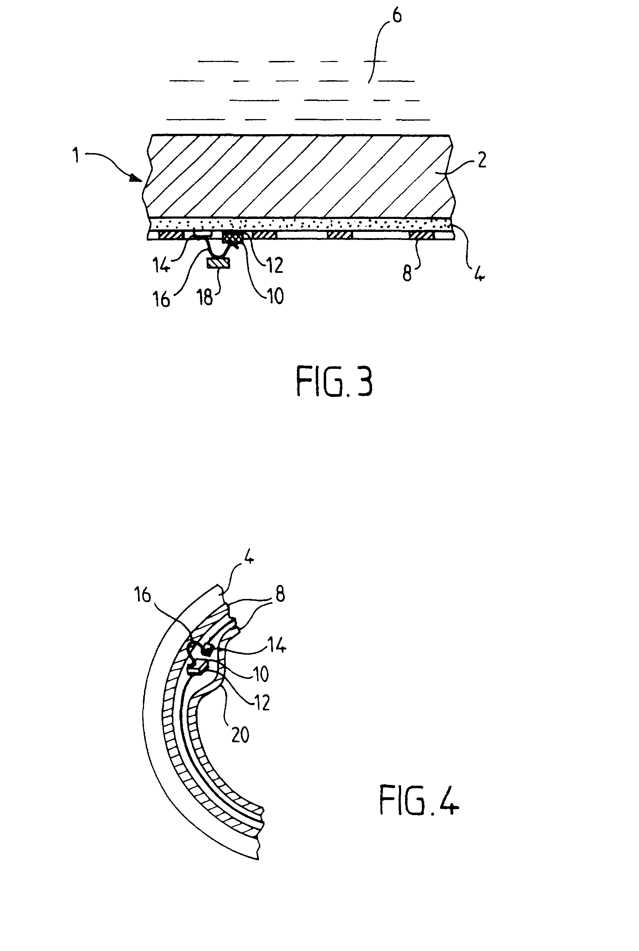

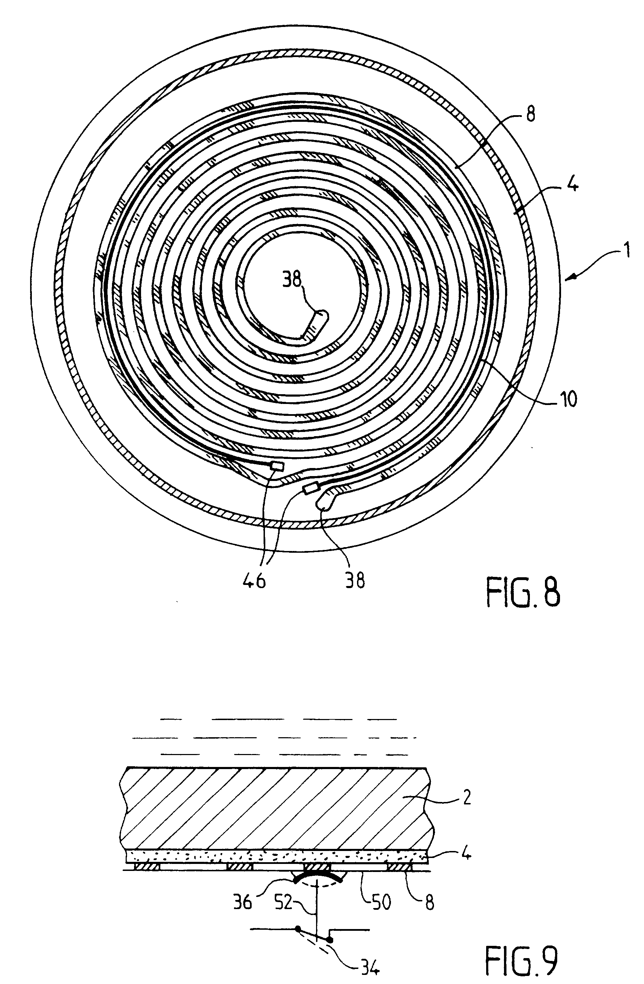

La plaque de chauffe 1 présentée figure 3 dans une vue en coupe dispose d'une piste résistive sérigraphiée en tant qu'élément de chauffe. Ainsi, une plaque métallique 2 est recouverte d'une couche 4 électriquement isolante mais conductrice thermique, comme une structure vitreuse. Sur cette couche 4 est appliquée une piste résistive 8 déposée de préférence par sérigraphie et dont les extrémités sont connectées à une source de courant. Cette piste résistive 8 peut aussi être une structure vitreuse chargée en particules métalliques afin de présenter une bonne conductivité électrique. Le tracé de cette piste est tel qu'il permet de chauffer uniformément la plaque sur laquelle elle est déposée. Un tracé en forme de spirale, tel qu'il est montré figure 8 est de préférence utilisé. Le choix, les caractéristiques des matériaux utilisés et les avantages d'une telle structure ne sont pas les objets de la présente invention et sont par ailleurs amplement décrits dans le document EP 574 310.

Entre deux spires de la piste résistive est insérée une micro-thermistance 10 en contact thermique avec la couche isolante 4 par un film conducteur électrique qui peut être une électrode d'argent ou tout autre métal.

La résistance électrique considérée est déterminée approximativement par le volume interne de la micro-thermistance 10. De même dans cette configuration, la continuité électrique du circuit d'alimentation du relais électromagnétique dans lequel est insérée cette micro-thermistance 10, est assurée par l'électrode d'argent 12 reliée à une partie du circuit d'alimentation du relais électromagnétique, et par la lame souple 16 maintenue par un support 18 qui permet d'appuyer cette lame 16 sur la micro-thermistance 10 d'une part, et d'autre part sur un plot conducteur 14. Ce plot 14 peut être de même nature que l'électrode d'argent 12. L'utilisation d'une lame souple permet le maintien de la micro-thermistance 10 sur l'électrode d'argent 12 et assure un bon contact électrique même lors du fonctionnement de l'appareil qui provoque des dilatations thermiques importantes des différents éléments.

Les connexions électriques de la micro-thermistance 10 au circuit d'alimentation du relais électromagnétique 30 devront être, de préférence, à la même température afin d'éviter le phénomène d'effet thermoélectrique. Ainsi, si l'une des connexions est réalisée par l'électrode 12, le plot 14 sera situé, de préférence, sur la couche d'isolant électrique 4.

La figure 4 présente, sur une vue de face de la plaque de chauffe, la localisation et les connexions de la micro-thermistance 10, où le support 18 de la lame souple 16 n'a pas été représenté par souci de clarté. Dans ce même souci, la micro-thermistance 10 a été représentée en volume afin de mieux visualiser ses connexions au circuit électrique. Pour une mise en oeuvre aisée de la micro-thermistance 10 et de ses connexions, la piste résistive 8 présente, par une rupture dans sa courbure, un décrochement 20 judicieusement étudié afin de ne pas présenter un rayon de courbure qui risquerait de créer, en fonctionnement, une surchauffe locale par un gradient d'intensité électrique trop important à cet endroit.

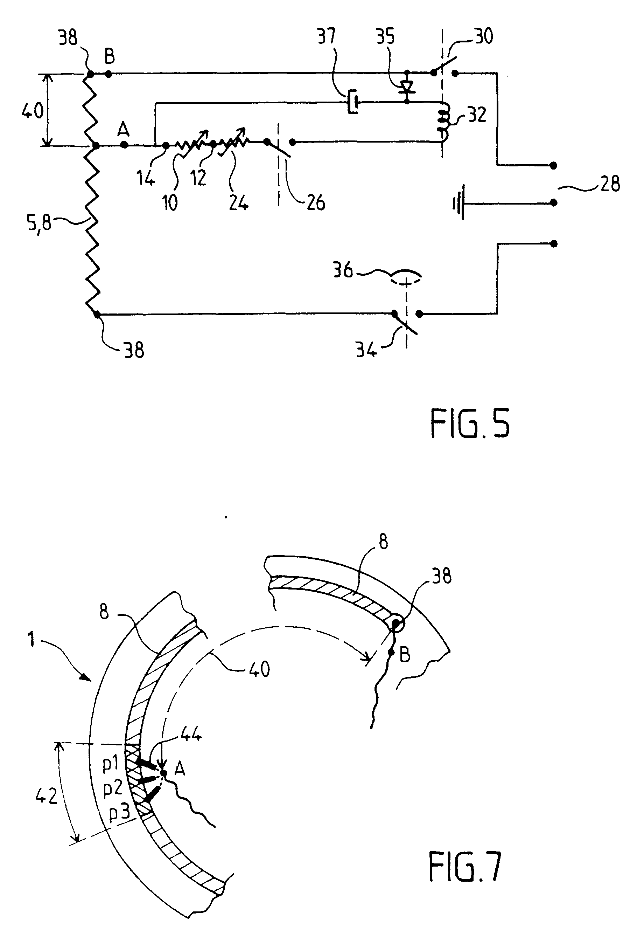

La figure 5 présente un schéma électrique possible d'une plaque de chauffe équipée d'un thermostat conforme à la présente invention. Ainsi l'élément chauffant 5, 8 est connecté par les plots 38 au réseau 28. Sur ce circuit électrique est inséré un relais électromagnétique 30 commandé par une bobine 32. Ce relais 30 peut être forcé manuellement pour mettre en marche l'appareil.

Le circuit d'alimentation électrique de la bobine 32 peut être indépendant du circuit principal, cependant, une solution simple consiste à prélever, sur la tension d'alimentation de l'élément chauffant 5, 8, la tension nécessaire à l'alimentation du relais.

Une première solution consiste donc à utiliser un relais basse tension alternatif ou une bobine relais 220 V comportant une spire de Frager sur le circuit magnétique, afin d'éviter les vibrations, auquel cas le circuit électrique de commande de l'électroaimant est connecté aux deux bornes 38 de l'élément chauffant 5, 8.

Une deuxième solution consiste à dériver une tension de la tension d'alimentation de l'élément chauffant 5, 8, la longueur de cet élément permettant de dériver assez précisément une tension propre à alimenter le circuit de commande de l'électroaimant 32. La tension d'alimentation de ce circuit de commande est alors assurée par un pont diviseur de tension, entre les points A et B, sur une portion 40 de la résistance de chauffe 5, 8. Une diode 35 ainsi qu'une capacité 37 permettent de redresser et de filtrer sommairement la tension alternative.

Ce circuit de commande comprend donc la micro-thermistance 10 de surchauffe ainsi qu'un interrupteur manuel d'arrêt de chauffe 26, couramment rencontré sur les appareils électroménagers. Lorsque l'appareil est destiné à chauffer de l'eau, il est intéressant de pouvoir détecter l'ébullition du liquide. Ainsi, une micro-thermistance d'ébullition 24 est électriquement mise en série avec la micro-thermistance de surchauffe afin que l'une ou l'autre des micro-thermistances puisse agir sur la commande du relais 30.

La micro-thermistance d'ébullition 24, placée dans le flux de vapeur issu de la bouilloire, présente des caractéristiques propres à détecter l'ébullition, c'est à dire que sa résistance électrique est nominale jusqu'à des températures voisines de 80°C et supérieure à 4000 Ω pour des températures supérieures à 90°C. Cette micro-thermistance d'ébullition est encapsulée dans un vernis de protection ou dans un boîtier à sortie bifilaire.

Lorsque les deux thermistances 10, 24 sont utilisées, il conviendra d'ajuster les valeurs nominales de chacune pour que leur mise en série permette de maintenir le courant aux niveaux précédemment indiqués, c'est à dire sous la valeur permettant la fermeture des contacts du relais.

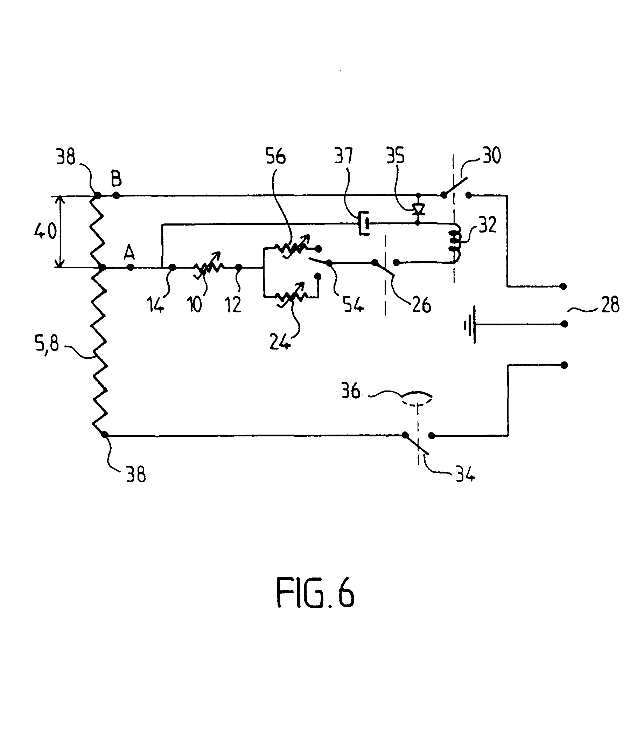

La figure 6 présente une variante possible du schéma électrique de la plaque de chauffe équipée d'un thermostat conforme à la présente invention, où une troisième micro-thermistance 56 dite d'eau chaude et destinée à détecter un seuil de température inférieure à la température d'ébullition de l'eau, par exemple 70°C, est mise électriquement en parallèle avec la thermistance d'ébullition 24.

Physiquement, cette micro-thermistance 56 est localisée contre le corps de la bouilloire. Un commutateur électrique 54, actionnable manuellement, à deux positions, et accessible depuis l'extérieur de l'appareil par l'utilisateur, est inséré dans le circuit de commande du relais électromagnétique, chacune des positions dudit commutateur permettant d'inclure, dans le circuit électrique de commande du relais électromagnétique, soit ladite thermistance d'eau chaude 56, soit la thermistance d'ébullition 24.

Ainsi, lors de la mise en marche de l'appareil, l'utilisateur choisit, par l'intermédiaire du commutateur 54, s'il désire que l'eau parvienne à ébullition ou seulement à une température dite chaude, comme par exemple 70°C. Pour ce dernier cas, par exemple, la micro-thermistance 56 possède une résistance électrique nominale inférieure à 550 Ω jusqu'à des températures voisines de 60°C et supérieure à 4000 Ω pour des températures supérieures à 70°C.

Le principe de réaction du dispositif étant basé sur une augmentation locale de résistance électrique d'un composant, l'interrupteur peut être disposé à distance de la zone chaude, notamment dans la poignée de la bouilloire, ce qui permet de gagner sur la hauteur totale de la bouilloire et notamment sur la hauteur du socle lorsque la bouilloire ou l'appareil dispose d'un socle d'alimentation amovible.

Afin d'ajuster la résistance électrique présentée par le circuit de commande du relais, il peut être prévu d'insérer une résistance de valeur ohmique relativement stable lors de l'utilisation de l'appareil. Ce peut être une résistance électrique courante qui présente alors une faible évolution de sa valeur ohmique dans la plage de température concernée par sa localisation légèrement ou totalement éloignée de la zone de chauffage.

La figure 7 présente plus concrètement, dans une vue de face de la plaque de chauffe 1, le dispositif utilisé pour dériver la tension d'alimentation de la commande de l'électroaimant 30. L'exemple proposé concerne une plaque à résistance sérigraphiée mais pourrait tout aussi bien s'appliquer à un élément de type blindé. Le point B du circuit électrique est physiquement lié à l'un des plots 38 représentant l'une des extrémités de la piste résistive 8. Le positionnement du point A permet de prélever la tension voulue.

Il paraît en effet important de disposer d'un moyen d'ajustement de la tension d'alimentation pour tenir compte de deux variables :

- la dispersion toujours possible sur la qualité de la sérigraphie de la piste 8 ou de l'élément blindé 5, un positionnement fixe du point A pouvant entraîner un dysfonctionnement du relais par une tension d'alimentation erronée.

- la fluctuation importante intervenant lors de la fabrication des thermistances et leur utilisation dans une gamme de courant très étroite, impose un moyen d'ajuster la tension sous laquelle elles sont alimentées.

Il est possible de prévoir une zone 42 où le point A doit être connecté afin que la tension entre les points A et B corresponde à la tension d'alimentation requise pour le fonctionnement de l'électroaimant 30. Une des solutions simples peut consister en une connexion au centre de cette zone afin, statistiquement, de limiter la fluctuation sur la valeur de tension.

Avantageusement, la précision sur cette valeur de tension peut être améliorée en disposant, au point A, d'une lame souple ou un dispositif similaire, pouvant être mis en appui sur une pastille d'argent 44 sérigraphiée. En disposant plusieurs pastilles dans la zone 42, soit $p_1$, $p_2$ et $p_3$, il est possible de connecter le point A sur l'une de ces pastilles qui représentent ainsi trois choix de connexion, afin que la tension entre les points A et B s'approche au mieux de la tension requise pour l'alimentation de l'électroaimant 30. Il est ainsi possible d'abaisser la tolérance sur la tension d'alimentation de l'électroaimant 30 jusqu'à ±3% pour une résistance sérigraphiée, et ±5% pour un élément de type blindé.

Dans une autre configuration possible de la présente invention, la figure 8 propose une vue de face de la plaque de chauffe où la piste résistive 8 a volontairement été noircie pour des soucis de clarté. La thermistance 10, dans cette configuration, est une résistance déposée par sérigraphie sur l'isolant 4 entre deux spires de la piste résistive 8, de manière à présenter une surface de contact relativement importante.

Avantageusement, la longueur de cette thermistance 10 est telle que ses deux connexions 46 soient à proximité l'une de l'autre, la thermistance ayant alors l'allure d'une spire. Cette configuration, qui peut aussi être appliquée à une résistance de type blindé, est particulièrement avantageuse car elle permet de détecter une éventuelle chauffe à sec locale de la bouilloire due à une inclinaison de la bouilloire.

En effet, une telle thermistance peut être considérée comme la mise en série de plusieurs micro-thermistances " unitaire " de faible dimension et comparables, dans la taille, à la micro-thermistance précédemment décrite. La résistance globale de la thermistance est donc la somme des résistances Ri des micro-thermistances " unitaires ". Cette valeur est ajustée pour présenter des caractéristiques similaires à une micro-thermistance précédemment décrite. Si l'une de ces résistances Ri vient à augmenter, suite à une augmentation locale de température, la résistance globale de la thermistance progresse alors jusqu'à des valeurs pouvant entraîner la coupure du relais par un courant de commande trop faible dans le circuit d'alimentation de la bobine. Cette piste peut aussi se limiter à plusieurs zones ponctuelles reliées en série.

Selon l'une des configurations présentées précédemment, la plaque de chauffe 1 peut être équipée d'un deuxième dispositif de protection contre la surchauffe de la plaque, sous la forme d'un bilame 36 à retournement brusque, système largement connu dans les appareils du type présenté. Ainsi, comme indiqué sur la figure 9, ce bilame 36 est placé sur une piste résistive 8 ou une résistance de type blindé 5 de laquelle il est isolé électriquement par un isolant 50 sous forme d'un film ou d'une feuille. Il peut s'agir, par exemple, d'une fine feuille de mica de 0,1 mm d'épaisseur. Cet isolant 50 peut aussi être déposé par sérigraphie.

Un contact 34 peut être actionné lors du retournement du bilame 36 par une ouverture brusque à l'aide d'une tige 52. Le réarmement se fait automatiquement à une température d'environ 20°C. Ce bilame 36 réagit dans un temps sensiblement plus long que la micro-thermistance 10. Disposé sur la piste 8, sa température de fonctionnement est alors voisine de 250°C. Il est bien sûr possible de placer le bilame 36 sur la plaque de chauffe 1 localement décapée ou sur l'isolant électrique 4, en modifiant ses caractéristiques (température de fonctionnement voisine de 130°C).

Le fonctionnement d'un tel dispositif est le suivant. Lorsque l'appareil est mis en marche en forçant physiquement le relais 30, par exemple par l'intermédiaire d'un bouton poussoir actionné par l'utilisateur, l'élément chauffant 5, 8 est traversé par un courant qui provoque son échauffement et permet, directement ou indirectement, d'augmenter la température de l'eau 6.

Les micro-thermistances de surchauffe et d'ébullition et d'eau chaude 10, 24, 56 présentent chacune une résistance voisine de quelques centaines d'Ohms évoluant peu au début de la chauffe, de sorte que les contacts du relais 30 restent fermés. Le circuit électrique d'alimentation du relais 30 est conçu pour que le courant maximum traversant les thermistances 10, 24, 56, et donc commandant le relais, soit supérieur au courant de maintien des contacts fermés du relais 30 mais inférieur au courant de commutation du relais, c'est à dire typiquement de l'ordre de 10 mA. Cette disposition est nécessaire afin de ne pas provoquer d'échauffement au niveau des micro-thermistances 10, 24, 56, rendues sensibles au courant les traversant du fait de leur petite taille.

Dès lors, le relais 30 doit être forcé manuellement afin de fermer les contacts, le courant maximum disponible dans son circuit de commande ne permettant pas cette commutation, pour les raisons évoquées ci-dessus.

Dans le cas où l'utilisateur a sélectionné, par la commande 54, une montée en température de l'eau jusqu'à l'ébullition, ou lorsqu'une telle commande n'est pas disponible, lorsque l'eau arrive à ébullition, la résistance de la micro-thermistance d'ébullition 24 augmente considérablement et présente une valeur supérieure à 4000 Ω de sorte que, les micro-thermistances 10, 24 étant montées en série dans le circuit de commande de l'électroaimant 30, le courant traversant la bobine 32 de commande de l'électroaimant 30 devient alors inférieur au courant minimal de maintien des contacts fermés.

Ainsi, les contacts de l'électroaimant 30 s'ouvrent brusquement, interrompant l'alimentation électrique de l'élément chauffant 5, 8. La plage de température incertaine pour chacune des deux thermistances est réduite à 15°C. Dans cette zone, le relais est ouvert ou encore fermé. Le même raisonnement sur le principe de fonctionnement peut être tenu lorsque l'utilisateur choisit uniquement d'amener la température de l'eau sous le seuil d'ébullition, par le commutateur 54.

De même, lorsque la plaque 1 est mise à chauffer en absence d'eau, la résistance de la thermistance 10 de surchauffe, vers 120°C, augmente considérablement, dépassant quelques $k\Omega$ et provoquant une diminution du courant d'alimentation de la bobine 32 de commande de l'électroaimant 30, et rapidement, une ouverture de ses contacts. Pour une plus grande sécurité, l'électroaimant peut être bipolaire.

Dans l'éventualité où ce dispositif ne fonctionnerait pas, un bilame 36 au contact thermique de l'élément chauffant 5, 8 permet d'interrompre l'alimentation de cet élément chauffant avant que l'appareil soit endommagé.

Ainsi la présente invention procure un thermostat économique puisqu'aucune électronique d'amplification n'est nécessaire. La présente invention permet donc de commuter 10/15 A sous 220 V avec un courant de commande typique de 5 mA, soit une amplification de l'ordre de 3000. Par ailleurs, le dispositif est simple, rapide et peu encombrant, permettant la régulation et la protection de dispositifs chauffants, à résistance de type blindé ou à résistance sérigraphiée, qui peuvent être des appareils chauffants l'eau, de type bouilloire ou cafetière. Cette invention trouve aussi son application dans des appareils comme les cuiseurs à riz, friteuse, cuit vapeur, grille-pain...

## POSSIBILITES D'APPLICATION INDUSTRIELLE

L'invention trouve son application dans le domaine technique de la régulation d'appareil chauffants et plus particulièrement dans celui des appareils grand public.

## Revendications

1. Thermostat pour appareil électroménager électrique comportant un corps de chauffe (1) ayant une plaque (2) en liaison thermique avec des éléments de chauffe (5, 8), ledit thermostat comportant en outre un relais électromagnétique (30) susceptible d'interrompre l'alimentation électrique des éléments de chauffe (5, 8), au moins une thermistance (10, 24) insérée dans le circuit de commande du relais (30) et disposée à proximité d'une zone de chauffage de l'eau ou en contact thermique avec la plaque de chauffe (2) si présente, **caractérisé en ce que** la valeur minimale de la résistance électrique présentée par la thermistance ou l'association des thermistances (10, 24, 56), est déterminée de telle sorte que le courant électrique maximal admis dans le circuit de commande du relais, lors du fonctionnement normal de l'appareil, soit supérieur au courant de maintien des contacts fermés du relais, mais inférieur au courant permettant la fermeture des contacts du relais.

2. Thermostat selon la revendication précédente, **caractérisé en ce qu'**une résistance électrique, dont la valeur ohmique fluctue peu lors de l'utilisation de l'appareil, est insérée dans le circuit de commande du relais où sont situées la thermistance (10, 24) ou l'association de thermistances (10, 24, 56).

3. Thermostat selon l'une des revendications précédentes, **caractérisé en ce qu'**une thermistance (10) de surchauffe présente un coefficient de température positif, de sorte que l'augmentation de la valeur ohmique de la résistance électrique de cette thermistance (10), due à une augmentation de température, est susceptible de diminuer le courant dans le circuit de commande du relais électromagnétique (30) sous la valeur minimale de maintien des contacts fermés du relais.

4. Thermostat selon l'une des revendications précédentes, **caractérisé en ce que** la thermistance (10) de surchauffe est reliée au circuit électrique du thermostat, d'une part par un contact (12) au niveau de la face de la thermistance (10) en contact thermique avec la plaque de chauffe (2) ou une plaque liée thermiquement aux moyens de chauffe, et d'autre part, sur la face opposée de la thermistance (10), par une lame souple (16) maintenue par un support (18), de manière à réaliser une continuité électrique du circuit de commande du relais électromagnétique (30) au niveau de la thermistance (10).

5. Thermostat selon l'une des revendications précédentes, **caractérisé en ce que** la thermistance (10) de surchauffe est constituée par au moins un dépôt sérigraphié inséré entre les spires de la résistance de chauffe (8).

6. Thermostat selon la revendication précédente, **caractérisé en ce que** la thermistance (10) de surchauffe est disposée sur une longueur sensiblement équivalente à la longueur de l'élément blindé (5) ou à une spire de la résistance de chauffe (8) lorsque l'élément de chauffe est une résistance sérigraphiée.

7. Thermostat selon l'une des revendications précédentes, **caractérisé en ce qu'**il comporte une deuxième thermistance (24) destinée à détecter l'ébullition d'un liquide (6), ladite thermistance (24) étant protégée de la vapeur par une couche hydrofuge de type vernis et étant montée mécaniquement dans le circuit de vapeur de l'appareil.

**8.** Thermostat selon la revendication précédente, **caractérisé en ce que** la thermistance (24) d'ébullition est montée électriquement en série avec la thermistance (10) de surchauffe.

**9.** Thermostat selon l'une des revendications précédentes, **caractérisé en ce qu'**au moins une des thermistances (10, 24) présente une épaisseur active, participant à la régulation, inférieure à 2 mm.

**10.** Thermostat selon l'une des revendications précédentes, **caractérisé en ce qu'**au moins une des thermistances (10, 24) présente une surface active, participant à la régulation, inférieure à 10 mm$^2$.

**11.** Thermostat selon l'une des revendications précédentes, **caractérisé en ce que** le relais électromagnétique (30) utilisé est un relais basse tension alternatif.

**12.** Thermostat selon l'une des revendications 1 à 10, **caractérisé en ce que** le relais électromagnétique (30) utilisé est un relais dont la tension d'alimentation est de 220 V alternatif.

**13.** Thermostat selon l'une des revendications 1 à 10, **caractérisé en ce que** l'alimentation du circuit de commande de l'interrupteur relais est réalisé par un pont diviseur de tension (40) établi sur l'élément de chauffe (5, 8).

**14.** Thermostat selon la revendication précédente, **caractérisé en ce que** la connexion réalisant le pont diviseur de tension peut être effectuée à différents endroits ($p_1$, $p_2$, $p_3$) de l'élément de chauffe (5, 8) afin que la tension d'alimentation du circuit de commande de l'interrupteur relais (30) reste proche d'une valeur nominale de fonctionnement du relais (30).

**15.** Thermostat selon l'une des revendications précédentes, **caractérisé en ce qu'**il comporte un deuxième dispositif évitant la surchauffe de l'élément de chauffe (5, 8), composé d'un bilame (36) à retournement brusque, disposé à la surface de l'élément de chauffe (5, 8) et comportant une tige (52) susceptible d'ouvrir le circuit électrique d'alimentation de la résistance de chauffe (5, 8) lorsque ce bilame (36) se retourne sous l'effet de l'augmentation anormale de la température présentée par l'élément de chauffe (5, 8) lors d'une surchauffe.

**Claims**

**1.** A thermostat for an electrical domestic appliance comprising a heating body (1) with a plate (2) in thermal connection with heater elements (5, 8), said thermostat further comprising an electromagnetic relay (30) suitable for interrupting the electrical power supply to the heater elements (5, 8), at least one thermistor (10, 24) inserted in the relay control circuit and disposed close to a water heating zone or in thermal contact with the heating plate (2) if present, the thermostat being **characterized in that** the minimum electrical resistance presented by the thermistor or the association of thermistors (10, 24, 56) is determined in such a manner that the maximum electrical current admitted to the relay control circuit during normal operation of the appliance is greater than the current for holding the relay contacts closed, but less than the current for causing the relay contacts to close.

**2.** A thermostat according to the preceding claim, **characterized in that** an. electrical resistor of resistance that fluctuates little while the appliance is in use is inserted in the relay control circuit where the thermistor (10, 24) or the association of thermistors (10, 24, 56) is/are situated.

**3.** A thermostat according to either one of the preceding claims, **characterized in that** an overheating thermistor (10) presents a positive temperature coefficient such that the increase in the electrical resistance of said thermistor (10) due to an increase in temperature is suitable for reducing the current flowing through the control circuit of the electromagnetic relay (30) to below the minimum value for holding the relay contacts closed.

**4.** A thermostat according to any preceding claim, **characterized in that** the overheating thermistor (10) is connected in the electrical circuit of the thermostat firstly via a contact (12) at the face of the thermistor (10) which is in thermal contact with the heating plate (2) or a plate thermally connected to the heater means, and secondly via the opposite face of the thermistor (10) by means of a spring blade (16) held by a support (18) in such a manner as to establish electrical continuity in the control circuit of the electromagnetic relay (30) through the thermistor (10).

**5.** A thermostat according to any preceding. claim, **characterized in that** the overheating thermistor (10) is constituted by at least one silk-screen deposit inserted between the turns of the heater resistor (8).

**6.** A thermostat according to the preceding claim, **characterized in that** the overheating thermistor (10) is disposed over a length that is substantially equivalent to the length of the metal-clad heater element (5) or a turn of the heater resistor (8) when the heater element is a silk-screened resistor.

7. A thermostat according to any preceding claim, **characterized in that** it has a second thermistor (24) for detecting boiling of a liquid (6), said thermistor (24) being protected from steam by a varnish type hydrophobic layer and being mounted in the steam circuit of the appliance.

8. A thermostat according to the preceding claim, **characterized in that** the boiling thermistor (24) is connected electrically in series with the overheating thermistor (10).

9. A thermostat according to any preceding claim, **characterized in that** at least one thermistor (10, 24) presents an active thickness contributing to regulation of less than 2 mm.

10. A thermostat according to any preceding claim, **characterized in that** at least one of the thermistors (10, 24) presents an active area, contributing to regulation, that is less than 10 mm$^2$.

11. A thermostat according to any preceding claim, **characterized in that** the electromagnetic relay (30) used is a low voltage AC relay.

12. A thermostat according to any one of claims 1 to 10, **characterized in that** the electromagnetic relay (30) used is a relay whose power supply voltage is 220 V AC.

13. A thermostat according to any one of claims 1 to 10, **characterized in that** the power supply to the relay switch control circuit is provided by a voltage divider bridge (40) established on the heater element (5, 8).

14. A thermostat according to the preceding claim, **characterized in that** the connection implementing the voltage divider bridge can be made to different locations ($p_1$, $p_2$, $p_3$) of the heater element (5, 8) so as to cause the power supply voltage to the relay switch control circuit (30) to remain close to a nominal operating value for the relay (30).

15. A thermostat according to any preceding claim, **characterized in that** it includes a second device for preventing the heater element (5, 8) overheating, the second device comprising a sudden-changeover bimetallic strip (36) placed on the surface of the heater element (5, 8) and including a rod (52) suitable for breaking the electrical power supply circuit to the heater resistor (5, 8) when the bimetallic strip (36) changes over under the effect of an abnormal increase in the temperature presented by the heater element (5, 8) during overheating.

**Patentansprüche**

1. Thermostat für ein elektrisches Elektrohaushaltsgerät mit einem Heizkörper (1) mit einer Platte (2) in thermischer Verbindung mit Heizelementen (5, 8), wobei der Thermostat außerdem ein elektromagnetisches Relais (30), das die elektrische Versorgung der Heizelemente (5, 8) unterbrechen kann, mindestens einen Thermistor (10, 24), der in die Steuerschaltung des Relais (30) eingefügt ist und in der Nähe einer Heizzone des Wassers oder in thermischem Kontakt mit der Heizplatte (2), falls vorhanden, angeordnet ist, **dadurch gekennzeichnet, daß** der minimale Wert des elektrischen Widerstandes, den der Thermistor oder die Vereinigung der Thermistoren (10, 24, 56) aufweist, derart festgelegt ist, daß der maximale elektrische Strom, der in die Steuerschaltung des Relais eingelassen wird, bei der normalen Funktion des Geräts höher ist als der Strom, um die Kontakte des Relais geschlossen zu halten, aber niedriger ist als der Strom, der das Schließen der Kontakte des Relais ermöglicht.

2. Thermostat nach dem vorangehenden Anspruch, **dadurch gekennzeichnet, daß** ein elektrischer Widerstand, dessen ohmscher Wert bei der Verwendung des Geräts wenig schwankt, in die Steuerschaltung des Relais eingefügt ist, wo sich der Thermistor (10, 24) oder die Vereinigung von Thermistoren (10, 24, 56) befindet.

3. Thermostat nach einem der vorangehenden Ansprüche, **dadurch gekennzeichnet, daß** ein Überhitzungsthermistor (10) einen positiven Temperaturkoeffizienten aufweist, so daß die Zunahme des ohmschen Werts des elektrischen Widerstandes dieses Thermistors (10) aufgrund einer Temperaturzunahme den Strom in der Steuerschaltung des elektromagnetischen Relais (30) unter den minimalen Wert, um die Kontakte des Relais geschlossen zu halten, verringern kann.

4. Thermostat nach einem der vorangehenden Ansprüche, **dadurch gekennzeichnet, daß** der Überhitzungsthermistor (10) mit der elektrischen Schaltung des Thermostats einerseits durch einen Kontakt (12) auf der Höhe der Seite des Thermistors (10) in thermischem Kontakt mit der Heizplatte (2) oder einer Platte, die thermisch mit den Heizmitteln verbunden ist, und andererseits auf der entgegengesetzten Seite des Thermistors (10) durch eine nachgiebige Lamelle (16), die durch einen Träger (18) gehalten wird, verbunden ist, um eine elektrische Kontinuität der Steuerschaltung des elektromagnetischen Relais (30) auf der Höhe des Thermistors (10) zu realisieren.

5.  Thermostat nach einem der vorangehenden Ansprüche, **dadurch gekennzeichnet, daß** der Überhitzungsthermistor (10) aus mindestens einer Siebdruckschicht besteht, die zwischen die Windungen des Heizwiderstandes (8) eingefügt ist.

6.  Thermostat nach dem vorangehenden Anspruch, **dadurch gekennzeichnet, daß** der Überhitzungsthermistor (10) auf einer Länge angeordnet ist, die im wesentlichen äquivalent zur Länge des gekapselten Elements (5) oder zu einer Windung des Heizwiderstandes (8) ist, wenn das Heizelement ein Siebdruckwiderstand ist.

7.  Thermostat nach einem der vorangehenden Ansprüche, **dadurch gekennzeichnet, daß** er einen zweiten Thermistor (24) aufweist, der das Sieden einer Flüssigkeit (6) erkennen soll, wobei der Thermistor (24) vor dem Dampf durch eine wasserabweisende Schicht des Typs Lack geschützt ist und mechanisch in dem Dampfkreislauf des Geräts montiert ist.

8.  Thermostat nach dem vorangehenden Anspruch, **dadurch gekennzeichnet, daß** der Siedethermistor (24) mit dem Überhitzungsthermistor (10) elektrisch in Reihe geschaltet ist.

9.  Thermostat nach einem der vorangehenden Ansprüche, **dadurch gekennzeichnet, daß** mindestens einer der Thermistoren (10, 24) eine aktive Dicke aufweist, die an der Regulierung teilnimmt und geringer als 2 mm ist.

10. Thermostat nach einem der vorangehenden Ansprüche, **dadurch gekennzeichnet, daß** mindestens einer der Thermistoren (10, 24) eine aktive Oberfläche aufweist, die an der Regulierung teilnimmt und die geringer als 10 mm$^2$ ist.

11. Thermostat nach einem der vorangehenden Ansprüche, **dadurch gekennzeichnet, daß** das verwendete elektromagnetische Relais (30) ein Relais mit niedriger Wechselspannung ist.

12. Thermostat nach einem der Ansprüche 1 bis 10, **dadurch gekennzeichnet, daß** das verwendete elektromagnetische Relais (30) ein Relais ist, dessen Versorgungsspannung 220 V Wechselspannung ist.

13. Thermostat nach einem der Ansprüche 1 bis 10, **dadurch gekennzeichnet, daß** die Versorgung der Steuerschaltung des Relaisunterbrechers durch eine Spannungsteilerbrücke (40) realisiert ist, die auf dem Heizelement (5, 8) aufgebaut ist.

14. Thermotat nach dem vorangehenden Anspruch, **dadurch gekennzeichnet, daß** die Verbindung, die die Spannungsteilerbrücke realisiert, an verschiedenen Orten ($p_1$, $p_2$, $p_3$) des Heizelements (5, 8) durchgeführt werden kann, damit die Versorgungsspannung der Steuerschaltung des Relaisunterbrechers (30) nahe einem nominalen Wert für die Funktion des Relais (30) bleibt.

15. Thermostat nach einem der vorangehenden Ansprüche, **dadurch gekennzeichnet, daß** er eine zweite Vorrichtung aufweist, die das Überhitzen des Heizelements (5, 8) vermeidet, welche aus einem Bimetall (36) mit plötzlicher Umkehr besteht, welches auf der Oberfläche des Heizelements (5, 8) angeordnet ist und eine Stange (52) aufweist, die die elektrische Versorgungsschaltung des Heizwiderstandes (5, 8) öffnen kann, wenn dieses Bimetall (36) unter der Wirkung der anomalen Zunahme der Temperatur, die das Heizelement (5, 8) bei einer Überhitzung aufweist, umkehrt.

FIG.1

FIG.2

FIG. 3

FIG. 4

FIG.5

FIG.7

FIG.6

FIG.8

FIG.9